# EUROPEAN PATENT APPLICATION

(11) **EP 3 136 238 A1**
(43) Date of publication of application: **01.03.2017**
(21) Application number: 14892637.1
(22) Date of filing: 11.10.2014
(51) Int. Cl.: G06F 11/07

(54) **METHOD AND APPARATUS FOR RECOVERING SYSTEM SOFTWARE OF INTELLIGENT TERMINAL**

(30) Priority: 21.05.2014 CN 201410216169
(71) Applicant: Huawei Technologies Co. Ltd., Shenzhen, Guangdong 518129 (CN)
(72) Inventor: WANG, Yakun, Shenzhen Guangdong 518129 (CN); LU, Zhijun, Shenzhen Guangdong 518129 (CN); CHEN, Lei, Shenzhen Guangdong 518129 (CN)
(74) Representative: Pfenning, Meinig & Partner mbB
(86) International application number: PCT/CN2014/088360
(87) International publication number: WO 2015/176468

(57) **Abstract**

A method and an apparatus for recovering system software of an intelligent terminal relate to the field of error recovery. The method includes: receiving a recovery instruction (101); obtaining wireless network connection information according to the recovery instruction (102); downloading a recovery package of the system software from a network according to the wireless network connection information (103); and completing recovery of the system software according to the recovery package of the system software (104). By means of the foregoing technical solutions, efficiency of system software recovery can be improved effectively, thereby improving user experience.

## Description

### TECHNICAL FIELD

The present invention relates to the field of terminals, and in particular, to a method and an apparatus for recovering system software of an intelligent terminal.

### BACKGROUND

An intelligent terminal has an independent mobile operating system. A function of the intelligent terminal may be expanded by installing programs such as application software and a game. Common mobile operating systems include the Android (Android) system of Google, the iOS system of Apple, the Symbian (Symbian) system of Nokia, the Bada system of Samsung, the Windows Phone system of Microsoft, the webOS system of Hewlett Packard, and the like.

An intelligent terminal has an independent mobile operating system. Therefore, when the mobile operating system is upgraded, the upgrade may fail. In addition, in a process of using the intelligent terminal, application software of the intelligent terminal may be damaged due to various reasons. As a result, the intelligent terminal cannot be normally used.

An Android terminal is used as an example. To resolve a recovery problem of system software of the intelligent terminal, a manufacturer packs a mobile operating system of the intelligent terminal in advance into a software package that can be loaded to the intelligent terminal, where the software package is referred to as a recovery package or an upgrade package. When the system software of the intelligent terminal is damaged, a terminal user first downloads the recovery package from a terminal manufacturer website by using a computer, then writes the recovery package into an SD (Secure Digital, Secure Digital card) card, and inserts the SD card into the terminal. When the intelligent terminal is powered on, the user enables the intelligent terminal to enter a particular system recovery mode by pressing a particular key combination (such as a power key + a volume up key). In the system recovery mode, the intelligent terminal recovers the system software of the intelligent terminal by using the recovery package.

As can be known from the foregoing, in the prior art, a recovery package is downloaded and written into an SD card by using a computer, and system software is recovered by using the SD card. Therefore, the entire operating process is relative complex, thereby causing relatively poor user experience.

### SUMMARY

Embodiments of the present invention provide a method and an apparatus for recovering system software of an intelligent terminal, so that system software can be recovered by directly using an intelligent terminal.

A first aspect of the embodiments of the present invention discloses a method for recovering system software of an intelligent terminal, where the method is applied to a scenario in which the system software is damaged and cannot enter a normal working mode, and the method includes:
receiving a recovery instruction;
obtaining wireless network connection information according to the recovery instruction;
downloading a recovery package of the system software from a network according to the wireless network connection information; and
completing recovery of the system software according to the recovery package of the system software.

With reference to the first aspect, in a first implementation manner of the first aspect, the obtaining wireless network connection information includes:
obtaining pre-stored wireless network connection information from a preset storage location.

With reference to the first aspect, in a second implementation manner of the first aspect, the obtaining wireless network connection information includes:
receiving wireless network connection information entered by a user.

With reference to the first aspect, the first implementation manner of the first aspect, or the second implementation manner of the first aspect, in a third implementation manner of the first aspect, the wireless network connection information includes a wireless network identifier, a password corresponding to the wireless network identifier, and a server address of a system software provider;
after the obtaining wireless network connection information, the method further includes:
establishing a wireless network connection according to the wireless network identifier and the password corresponding to the wireless network identifier; and
the downloading a recovery package of the system software from a network according to the wireless network connection information includes:
   downloading the recovery package of the system software from a server of the system software provider according to the server address of the system software provider.

With reference to the first aspect, the first implementation manner of the first aspect, the second implementation manner of the first aspect, or the third implementation manner of the first aspect, in a fourth implementation manner of the first aspect, the completing recovery of the system software according to the recovery package of the system software includes:
parsing the recovery package of the system software, to obtain an installation program of the system software;
writing the installation program of the system software into a system partition; and
recovering the system software according to the installation program of the system software.

With reference to the fourth possible implementation manner of the first aspect, in a fifth possible implementation manner of the first aspect, after the recovering the system software according to the installation program of the system software, the method further includes:
when a prompt of a recovery failure of the system software is received, sending a message prompt to the user, where the message prompt includes suggesting the user to perform recovery in a manner of recovering another system software.

With reference to the first aspect or any one of the first to the fifth possible implementation manners of the first aspect, in a sixth possible implementation manner of the first aspect, before the receiving a recovery instruction, the method further includes:
displaying a system software recovery menu, for the user to select a system recovery mode from the menu; and
the receiving a recovery instruction includes:
   receiving an instruction corresponding to the system software recovery mode selected from the menu by the user; and
   the obtaining wireless network connection information according to the recovery instruction includes:
      when the instruction corresponding to the system software recovery mode is a one-click system software recovery instruction, obtaining the wireless network connection information.

A second aspect of the embodiments of the present invention discloses an apparatus for recovering system software of an intelligent terminal, where the apparatus includes:
a receiving unit, configured to receive a recovery instruction;
an obtaining unit, configured to obtain wireless network connection information according to the recovery instruction received by the receiving unit;
a downloading unit, configured to download a recovery package of system software from a network according to the wireless network connection information obtained by the obtaining unit; and
a recovery unit, configured to complete recovery of the system software according to the recovery package of the system software downloaded by the downloading unit.

With reference to the second aspect, in a first implementation manner of the second aspect, the obtaining unit is specifically configured to obtain pre-stored wireless network connection information from a preset storage location according to the recovery instruction received by the receiving unit.

With reference to the second aspect, in a second implementation manner of the second aspect,
the obtaining unit is specifically configured to receive, according to the recovery instruction received by the receiving unit, wireless network connection information entered by a user.

With reference to the second aspect, the first implementation manner of the second aspect, or the second implementation manner of the second aspect, in a third implementation manner of the second aspect, the wireless network connection information includes a wireless network identifier, a password corresponding to the wireless network identifier, and a server address of a system software provider;
the intelligent terminal further includes a connection unit, where
the connection unit is specifically configured to establish a wireless network connection according to the wireless network identifier and the password corresponding to the wireless network identifier; and
the downloading unit is specifically configured to download the recovery package of the system software from a server of the system software provider according to the server address of the system software provider.

With reference to the second aspect, the first implementation manner of the second aspect, the second implementation manner of the second aspect, or the third implementation manner of the second aspect, in a fourth implementation manner of the second aspect, the recovery unit includes a parsing module, a writing module, and a recovery module, where
the parsing module is specifically configured to parse the recovery package of the system software, to obtain an installation program of the system software;
the writing module is specifically configured to write the installation program of the system software into a system partition; and
the recovery module is specifically configured to recover the system software according to the installation program of the system software.

With reference to the fourth possible implementation manner of the second aspect, in a fifth possible implementation manner of the second aspect, the intelligent terminal further includes a prompting unit, where
the prompting unit is specifically configured to: when a prompt of a recovery failure of the system software is received, send a message prompt to the user, where the message prompt comprises suggesting the user to perform recovery in a manner of recovering another system software.

With reference to the second aspect or any one of the first to the fifth possible implementation manners of the second aspect, in a sixth possible implementation manner of the second aspect, the intelligent terminal further includes a display unit, where
the display unit is specifically configured to display a system software recovery menu, for the user to select a system recovery mode from the menu;
the receiving unit is specifically configured to receive an instruction corresponding to the system software recovery mode selected from the menu by the user; and
the obtaining unit is specifically configured to: when the instruction corresponding to the system software recovery mode is a one-click system software recovery instruction, obtain the wireless network connection information.

As can be known from the foregoing, by means of the method for recovering system software of an intelligent terminal provided in the embodiments of the present invention, when an operation instruction is a one-click system software recovery instruction, wireless network connection information is obtained; a recovery package of system software is downloaded from a network according to the wireless network connection information; and recovery of the system software is completed according to the recovery package of the system software, thereby improving efficiency of the recovery of the system software, reducing a complex operating process in the prior art, and improving user experience.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for recovering system software of an intelligent terminal according to an embodiment of the present invention;
FIG. 2 is a flowchart of a method for recovering system software of an intelligent terminal according to another embodiment of the present invention;
FIG. 3 is a flowchart of a method for recovering system software of an intelligent terminal according to another embodiment of the present invention;
FIG. 4 is a structural diagram of an apparatus for recovering system software of an intelligent terminal according to another embodiment of the present invention;
FIG. 5 is a structural diagram of an apparatus for recovering system software of an intelligent terminal according to an embodiment of the present invention;
FIG. 6 is a structural diagram of an apparatus for recovering system software of an intelligent terminal according to another embodiment of the present invention; and
FIG. 7 is a structural diagram of an apparatus for recovering system software of an intelligent terminal according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

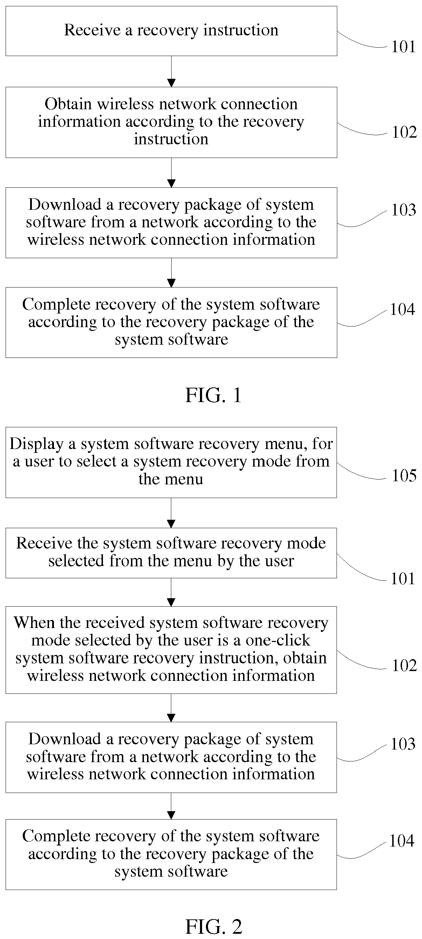

A method for recovering system software of an intelligent terminal in an embodiment of the present invention is described below according to FIG. 1. The method may be applied to a scenario in which the system software is damaged and cannot enter a normal working mode, and the method specifically includes step 101 to step 104.

101: Receive a recovery instruction.

When a system is damaged or cannot normally enter an operation interface of an intelligent terminal, the intelligent terminal can automatically enter a system software recovery mode according to settings, and a system software recovery menu pops up for a user to perform selection.

Optionally, before step 101, the method further includes step 105 (as shown in FIG. 2).

Step 105 is specifically: displaying a system software recovery menu, for a user to select a system recovery mode from the menu.

The receiving an operation instruction includes:
receiving an instruction corresponding to the system software recovery mode selected from the menu by the user.

The system software recovery menu may include multiple types of system software recovery solutions. To make technical solutions of the present invention compatible with an existing system recovery solution, the system software solution of the present invention, as an optional method, is embedded in the system software recovery menu for the user to select. For example, in the prior art, a recovery package of system software may be downloaded by using a computer, and then the recovery package is imported to an SD (Secure Digital, Secure Digital card) card. An intelligent terminal recovers the system software by using the recovery package in the SD card. The prior art is also an optional solution in the system software recovery menu.

Alternatively, the system software recovery menu may include only one recovery solution, that is, the system software recovery solution provided in the present invention.

102: Obtain wireless network connection information according to the recovery instruction.

In an embodiment of the present invention, the obtaining wireless network connection information according to the recovery instruction includes: when received instruction corresponding to the system software recovery mode selected by the user is a one-click system software recovery instruction, obtaining the wireless network connection information.

Optionally, in an embodiment of the present invention, the obtaining wireless network connection information includes: obtaining pre-stored wireless network connection information from a preset location. The wireless network connection information is wireless network connection information when the user normally uses the intelligent terminal. The wireless network connection information is saved at the preset location of the intelligent terminal by the intelligent terminal. When the user changes the wireless network connection information, the intelligent terminal automatically records new wireless network information, so that during recovery of the system software, wireless network connection information matching a wireless network of the intelligent terminal may be obtained.

Optionally, in another embodiment of the present invention, the obtaining wireless network connection information includes: receiving wireless network connection information entered by a user. A server address of a system software provider may be pre-stored. The wireless network connection information entered by the user includes a wireless network identifier and a password corresponding to the wireless network identifier. Alternatively, the wireless network connection information entered by the user includes a wireless network identifier, a password corresponding to the wireless network identifier, and a server address of a system software provider.

When the intelligent terminal is located in a new network, and wireless network connection information matching the new network is not saved before, the user needs to manually enter the wireless network connection information, so as to connect to the wireless network.

103: Download a recovery package of the system software from a network according to the wireless network connection information.

The recovery package of the system software is a software package into which a manufacturer packs a mobile operating system or application software and that can be loaded to the intelligent terminal, where the recovery package may also be referred to as an upgrade package.

Optionally, in another embodiment of the present invention, the wireless network connection information includes a wireless network identifier, a password corresponding to the wireless network identifier, and a server address of a system software provider;
after the obtaining wireless network connection information, the method further includes:
establishing a wireless network connection according to the wireless network identifier and the password corresponding to the wireless network identifier; and
the downloading a recovery package of the system software from a network according to the wireless network connection information includes:
   downloading the recovery package of the system software from a server of the system software provider according to the server address of the system software provider.

104: Complete recovery of the system software according to the recovery package of the system software.

Optionally, in another embodiment of the present invention, the completing recovery of the system software according to the recovery package of the system software includes:
parsing the recovery package of the system software, to obtain an installation program of the system software;
writing the installation program of the system software into a system partition; and
recovering the system software according to the installation program of the system software.

Optionally, in another embodiment of the present invention, after the recovering the system software according to the installation program of the system software, the method further includes:
when a prompt of a recovery failure of the system software is received, sending a message prompt to the user, where the message prompt includes suggesting the user to perform recovery in a manner of recovering another system software.

As can be known from the foregoing, by means of the method for recovering system software of an intelligent terminal provided in this embodiment of the present invention, when an operation instruction is a one-click system software recovery instruction, wireless network connection information is obtained; a recovery package of system software is downloaded from a network according to the wireless network connection information; and recovery of the system software is completed according to the recovery package of the system software, thereby improving efficiency of the recovery of the system software, reducing a complex operating process in the prior art, and improving user experience.

In an embodiment of the present invention, to be compatible with an existing system software recovery solution in an intelligent terminal, a submode is added based on an original system software recovery mode of the intelligent terminal and is referred to as an eRecovery mode. The submode implements the technical solutions of the present invention. Alternatively, the eRecovery may be used as an independent mode and is not compatible with the existing system software recovery solution.

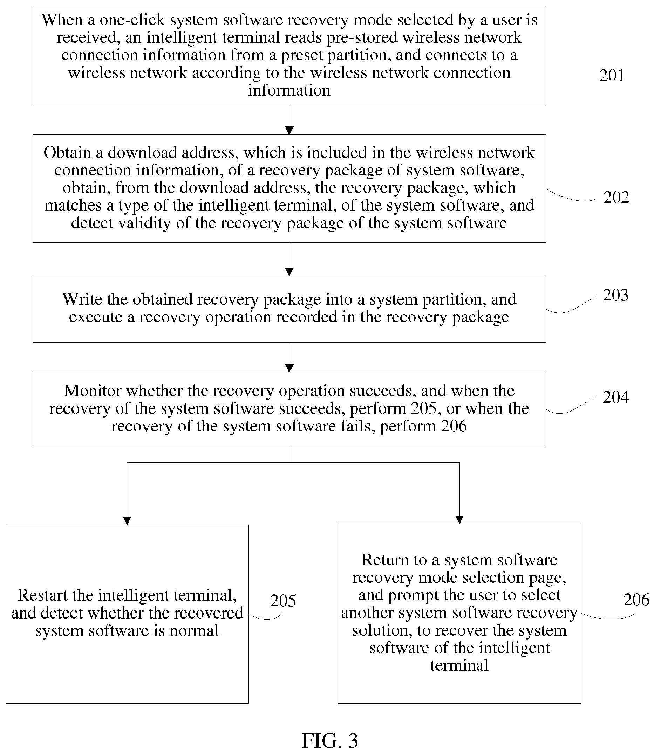

As shown in FIG. 3, the intelligent terminal displays various system software recovery modes on a screen by using a menu for a user to select.

201: When a one-click system software recovery mode selected by a user is received, an intelligent terminal reads pre-stored wireless network connection information from a preset partition, and connects to a wireless network according to the wireless network connection information.

202: Obtain a download address, which is included in the wireless network connection information, of a recovery package of system software, obtain, from the download address, the recovery package, which matches a type of the intelligent terminal, of the system software, and detect validity of the recovery package of the system software.

The detecting validity of the recovery package of the system software includes detecting whether the recovery package of the system software is a recently-updated recovery package, whether a signature of the recovery package is correct, and the like.

203: Write the obtained recovery package into a system partition, and execute a recovery operation recorded in the recovery package.

204: Monitor whether the recovery operation succeeds, and when the recovery of the system software succeeds, perform 205, or when the recovery of the system software fails, perform 206.

205: Restart the intelligent terminal, and detect whether the recovered system software is normal.

206: Return to a system software recovery mode selection page, and prompt the user to select another system software recovery solution, to recover the system software of the intelligent terminal.

As can be known from the foregoing, by means of the method for recovering system software of an intelligent terminal provided in this embodiment of the present invention, when an operation instruction is a one-click system software recovery instruction, wireless network connection information is obtained; a recovery package of system software is downloaded from a network according to the wireless network connection information; and recovery of the system software is completed according to the recovery package of the system software, thereby improving efficiency of the recovery of the system software, reducing a complex operating process in the prior art, and improving user experience.

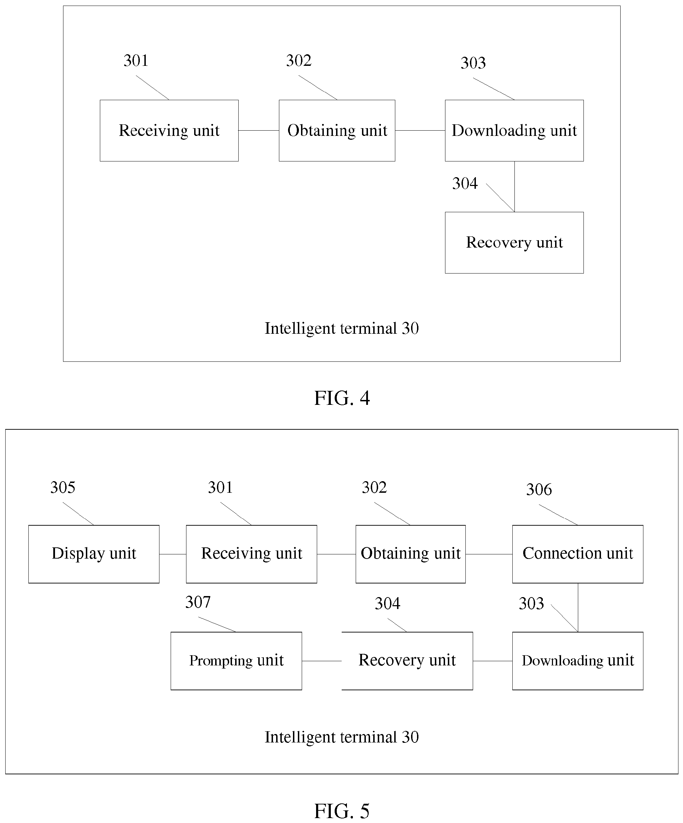

The following describes an intelligent terminal 30 in an embodiment of the present invention according to FIG. 4. The intelligent terminal 30 includes: a receiving unit 301, an obtaining unit 302, a downloading unit 303, and a recovery unit 304.

The receiving unit 301 is configured to receive a recovery instruction.

Optionally, the apparatus 30 further includes a display unit 305 (as shown in FIG. 5).

The display unit 305 is specifically configured to display a system software recovery menu, for a user to select a system recovery mode from the menu.

The receiving unit 301 is specifically configured to receive an instruction corresponding to the system software recovery mode selected from the menu by the user.

The obtaining unit 302 is configured to obtain wireless network connection information according to the recovery instruction received by the receiving unit 301.

In an embodiment of the present invention, the receiving unit 301 is specifically configured to receive an instruction corresponding to the system software recovery mode selected from the menu by the user; and the obtaining unit 302 is specifically configured to: when the instruction corresponding to the system software recovery mode is a one-click system software recovery instruction, obtain the wireless network connection information.

In an embodiment of the present invention, the obtaining unit 302 is specifically configured to: when the operation instruction is a one-click system software recovery instruction, obtain pre-stored wireless network connection information from a preset location.

In another embodiment of the present invention, the obtaining unit 302 is specifically configured to: when the operation instruction is a one-click system software recovery instruction, receive wireless network connection information entered by the user.

The downloading unit 303 is configured to download a recovery package of system software from a network according to the wireless network connection information obtained by the obtaining unit 302.

In an embodiment of the present invention, the wireless network connection information includes a wireless network identifier, a password corresponding to the wireless network identifier, and a server address of a system software provider. As shown in FIG. 5, the intelligent terminal 30 further includes a connection unit 306.

The connection unit 306 is specifically configured to establish a wireless network connection according to the wireless network identifier and the password corresponding to the wireless network identifier.

The downloading unit 303 is specifically configured to download the recovery package of the system software from a server of the system software provider according to the server address of the system software provider.

The recovery unit 304 is configured to complete recovery of the system software according to the recovery package of the system software downloaded by the downloading unit 303.

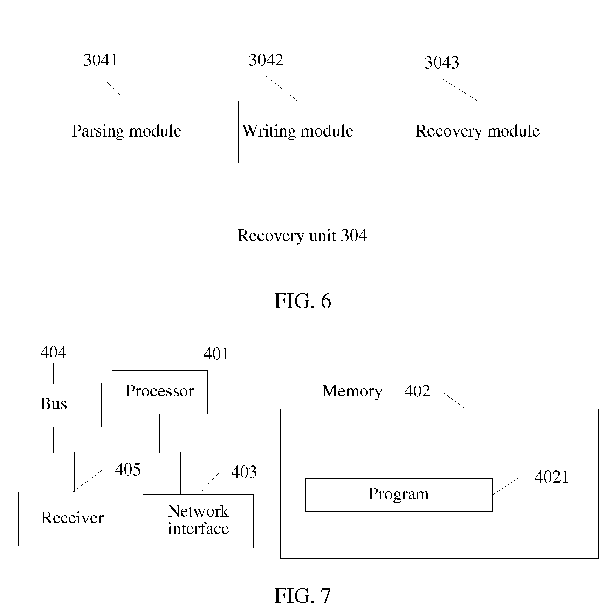

As shown in FIG. 6, in another embodiment of the present invention, the recovery unit 304 includes a parsing module 3041, a writing module 3042, and a recovery module 3043.

The parsing module 3041 is specifically configured to parse the recovery package of the system software, to obtain an installation program of the system software.

The writing module 3042 is specifically configured to write the installation program of the system software into a system partition.

The recovery module 3043 is specifically configured to recover the system software according to the installation program of the system software.

As shown in FIG. 5, in another embodiment of the present invention, the intelligent terminal 30 further includes a prompting unit 307.

The prompting unit 307 is specifically configured to: when a prompt of a recovery failure of the system software is received, send a message prompt to the user, where the message prompt includes suggesting the user to perform recovery in a manner of recovering another system software.

As can be known from the foregoing, by means of the apparatus for recovering system software of an intelligent terminal provided in this embodiment of the present invention, when an operation instruction is a one-click system software recovery instruction, wireless network connection information is obtained; a recovery package of system software is downloaded from a network according to the wireless network connection information; and recovery of the system software is completed according to the recovery package of the system software, thereby improving efficiency of the recovery of the system software, reducing a complex operating process in the prior art, and improving user experience.

FIG. 7 describes the structure of an intelligent terminal according to another embodiment of the present invention, which includes at least one processor 401 (for example, a CPU), a memory 402, at least one network interface 403, at least one communications bus 404, and at least one receiver 405, where the communications bus 404 is configured to implement connections and communication between these apparatuses. The processor 401 is configured to execute an executable module, such as a computer program, stored in the memory 402. The memory 402 may include a high-speed random access memory (RAM: Random Access Memory), and may further include a non-volatile memory (non-volatile memory), such as at least an eMMC (Embedded Multi Media Card, embedded multimedia card) memory. Communication and a connection between the network device and at least another network element are implemented through the at least one network interface 303 (which may be wired or wireless), and the Internet, a wide area network, a local area network, a metropolitan area network, or the like may be used.

In some implementation manners, the memory 402 stores a program 4021, where the program 4021 may be executed by the processor 301, and the program includes:
receiving a recovery instruction;
obtaining wireless network connection information according to the recovery instruction;
downloading a recovery package of the system software from a network according to the wireless network connection information; and
completing recovery of the system software according to the recovery package of the system software.

The obtaining wireless network connection information includes obtaining pre-stored wireless network connection information from a preset storage location; or receiving, by using the receiver 405, wireless network connection information entered by a user.

The wireless network connection information includes a wireless network identifier, a password corresponding to the wireless network identifier, and a server address of a system software provider.

After obtaining the wireless network connection information, the processor 401 may be configured to:
establish a wireless network connection according to the wireless network identifier and the password corresponding to the wireless network identifier.

The downloading a recovery package of the system software from a network according to the wireless network connection information includes:
downloading the recovery package of the system software from a server of the system software provider according to the server address of the system software provider.

Specifically, the completing recovery of the system software according to the recovery package of the system software includes:
parsing the recovery package of the system software, to obtain an installation program of the system software;
writing the installation program of the system software into a system partition; and
recovering the system software according to the installation program of the system software.

After the recovering the system software according to the installation program of the system software, the program further includes:
when a prompt of a recovery failure of the system software is received, sending a message prompt to the user, where the message prompt includes suggesting the user to perform recovery in a manner of recovering another system software.

Before the receiving an operation instruction of a user, the method further includes:
displaying a system software recovery menu, for the user to select a system recovery mode from the menu.

The receiving a recovery instruction includes:
receiving an instruction corresponding to the system software recovery mode selected from the menu by the user.

The obtaining wireless network connection information according to the recovery instruction includes:
when the instruction corresponding to the system software recovery mode is a one-click system software recovery instruction, obtaining the wireless network connection information.

Specific implementation steps are the same as those in the embodiment shown in FIG. 1. Details are not described herein again.

As can be known from the foregoing, by means of the method for recovering system software of an intelligent terminal provided in this embodiment of the present invention, when an operation instruction is a one-click system software recovery instruction, wireless network connection information is obtained; a recovery package of system software is downloaded from a network according to the wireless network connection information; and recovery of the system software is completed according to the recovery package of the system software, thereby improving efficiency of the recovery of the system software, reducing a complex operating process in the prior art, and improving user experience.

It should be noted that, for brief description, the foregoing method embodiments are represented as a series of actions. However, a person skilled in the art should appreciate that the present invention is not limited to the described order of the actions, because according to the present invention, some steps may be performed in other orders or simultaneously. In addition, a person skilled in the art should also understand that all the embodiments described in this specification belong to exemplary embodiments, and the involved actions and modules are not necessarily mandatory to the present invention.

Content such as information exchange and an execution process between the modules in the foregoing apparatus and system is based on a same idea as the method embodiments of the present invention. Therefore, for detailed content, refer to descriptions in the method embodiments of the present invention, and details are not described herein again.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may include: a magnetic disk, an optical disc, a read-only memory (ROM: Read-Only Memory), or a random access memory (RAM: Random Access Memory).

Specific examples are used in this specification to describe the principle and implementation manners of the present invention. The descriptions of the foregoing embodiments are merely intended to help understand the method and idea of the present invention. In addition, with respect to the implementation manners and the application scope, modifications may be made by a person of ordinary skill in the art according to the idea of the present invention. Therefore, this specification shall not be construed as a limitation on the present invention.

## Claims

1. A method for recovering system software of an intelligent terminal, wherein the method is applied to a scenario in which the system software is damaged and cannot enter a normal working mode, and the method comprises:
receiving a recovery instruction;
obtaining wireless network connection information according to the recovery instruction;
downloading a recovery package of the system software from a network according to the wireless network connection information; and
completing recovery of the system software according to the recovery package of the system software.

2. The method according to claim 1, wherein the obtaining wireless network connection information comprises:
obtaining pre-stored wireless network connection information from a preset storage location.

3. The method according to claim 1, wherein the obtaining wireless network connection information comprises:
receiving wireless network connection information entered by a user.

4. The method according to any one of claims 1 to 3, wherein the wireless network connection information comprises a wireless network identifier, a password corresponding to the wireless network identifier, and a server address of a system software provider;
after the obtaining wireless network connection information, the method further comprises:
establishing a wireless network connection according to the wireless network identifier and the password corresponding to the wireless network identifier; and
the downloading a recovery package of the system software from a network according to the wireless network connection information comprises:
downloading the recovery package of the system software from a server of the system software provider according to the server address of the system software provider.

5. The method according to any one of claims 1 to 4, wherein the completing recovery of the system software according to the recovery package of the system software comprises:
parsing the recovery package of the system software, to obtain an installation program of the system software;
writing the installation program of the system software into a system partition; and
recovering the system software according to the installation program of the system software.

6. The method according to claim 5, after the recovering the system software according to the installation program of the system software, further comprising:
sending a message prompt to the user, when a prompt of a recovery failure of the system software is received, wherein the message prompt comprises suggesting the user to perform recovery in a manner of recovering another system software.

7. The method according to any one of claims 1 to 6, wherein before the receiving a recovery instruction, the method further comprises:
displaying a system software recovery menu, for the user to select a system recovery mode from the menu;
the receiving a recovery instruction comprises:
receiving an instruction corresponding to the system software recovery mode selected from the menu by the user; and
the obtaining wireless network connection information according to the recovery instruction comprises:
obtaining the wireless network connection information, when the instruction corresponding to the system software recovery mode is a one-click system software recovery instruction.

8. An intelligent terminal, wherein the intelligent terminal comprises:
a receiving unit, configured to receive a recovery instruction;
an obtaining unit, configured to obtain wireless network connection information according to the recovery instruction received by the receiving unit;
a downloading unit, configured to download a recovery package of system software from a network according to the wireless network connection information obtained by the obtaining unit; and
a recovery unit, configured to complete recovery of the system software according to the recovery package of the system software downloaded by the downloading unit.

9. The intelligent terminal according to claim 8, wherein
the obtaining unit is specifically configured to obtain pre-stored wireless network connection information from a preset location according to the recovery instruction received by the receiving unit.

10. The intelligent terminal according to claim 8, wherein
the obtaining unit is specifically configured to receive, according to the recovery instruction received by the receiving unit, wireless network connection information entered by a user.

11. The intelligent terminal according to claims 8 to 10, wherein the wireless network connection information comprises a wireless network identifier, a password corresponding to the wireless network identifier, and a server address of a system software provider;
the intelligent terminal further comprises a connection unit, wherein
the connection unit is specifically configured to establish a wireless network connection according to the wireless network identifier and the password corresponding to the wireless network identifier; and
the downloading unit is specifically configured to download the recovery package of the system software from a server of the system software provider according to the server address of the system software provider.

12. The intelligent terminal according to claims 8 to 11, wherein the recovery unit comprises a parsing module, a writing module, and a recovery module, wherein
the parsing module is specifically configured to parse the recovery package of the system software, to obtain an installation program of the system software;
the writing module is specifically configured to write the installation program of the system software into a system partition; and
the recovery module is specifically configured to recover the system software according to the installation program of the system software.

13. The intelligent terminal according to claim 12, wherein the intelligent terminal further comprises a prompting unit, wherein
the prompting unit is specifically configured to: send a message prompt to the user, when a prompt of a recovery failure of the system software is received, wherein the message prompt comprises suggesting the user to perform recovery in a manner of recovering another system software.

14. The intelligent terminal according to any one of claims 8 to 13, wherein the intelligent terminal further comprises a display unit, wherein
the display unit is specifically configured to display a system software recovery menu, for the user to select a system recovery mode from the menu;
the receiving unit is specifically configured to receive an instruction corresponding to the system software recovery mode selected from the menu by the user; and
the obtaining unit is specifically configured to: obtain the wireless network connection information, when the instruction corresponding to the system software recovery mode is a one-click system software recovery instruction.
